# EUROPÄISCHE PATENTANMELDUNG

(11) **EP 4 071 040 A1**
(43) Veröffentlichungstag der Anmeldung: **12.10.2022**
(21) Anmeldenummer: 22162553.6
(22) Anmeldetag: 16.03.2022
(51) Int. Cl.: B62K 27/12, B62K 27/04, B62D 63/06, B62K 27/06, B60D 1/00

(54) **KUPPLUNGSANORDNUNG SOWIE TRANSPORTGERÄT MIT KUPPLUNGSANORDNUNG**

(30) Priorität: 07.04.2021 DE 202021101843 U
(71) Anmelder: Indorf Apparatebau GmbH, 29664 Walsrode (DE)
(72) Erfinder: Wolf, Michael, 22880 Wedel (DE)
(74) Vertreter: Glück Kritzenberger Patentanwälte PartGmbB

(57) **Zusammenfassung**

Die Erfindung betrifft eine Kupplungsanordnung (100) zum Verbinden und/oder Zusammenhalten eines Transportgeräts (1) zur Beförderung von Gegenständen (G) und/oder Personen mit einem Fahrzeug, insbesondere einem Fahrrad oder E-Bike, zumindest aufweisend ein erstes Kupplungsteil (110) und ein zweites Kupplungsteil (120), wobei das erste und zweite Kupplungsteil (110, 120) zusammenwirken und miteinander lösbar verbindbar sind. Das erste Kupplungsteil (110) weist zumindest ein erstes Kupplungselement (111) und ein erstes Befestigungselement (112) und das zweite Kupplungsteil (120) weist zumindest ein zweites Kupplungselement (121) und ein zweites Befestigungselement (122) auf. Das erste Kupplungselement (111) des ersten Kupplungsteils (110) ist lösbar, jedoch fest, mit dem zweiten Kupplungselement (121) des zweiten Kupplungsteils (120) verbindbar. Das erste Befestigungselement (112) des ersten Kupplungsteils (110) ist direkt oder indirekt mit dem Fahrzeug und das zweite Befestigungselement (122) des zweiten Kupplungsteils (120) ist direkt oder indirekt mit dem Transportgerät (1) verbindbar, wobei das erste Kupplungsteil (110) eine Gelenkeinrichtung (GE) aufweist, die das erste Kupplungselement (111) kardanisch mit dem ersten Befestigungselement (112) verbindet, wobei die Gelenkeinrichtung (GE) vorzugsweise zwei im Wesentlichen rechtwinklig zueinander verlaufende Gelenkachsen (GA1, GA2) aufweist. Das erste Kupplungselement (111) des ersten Kupplungsteils (110) und das zweite Kupplungselement (121) des zweiten Kupplungsteils (120) sind als derartige Steckkupplung ausgebildet, bei der das erste oder zweite Kupplungselement (111, 121) ausschließlich durch ein axiales Ineinanderstecken mit dem entsprechend korrespondierenden ersten oder zweiten Kupplungselement (111, 121) in eine Kupplungsposition (KP) kuppelnd einrastet.

## Beschreibung

Die vorliegende Erfindung betrifft eine Kupplungsanordnung zum Verbinden und/oder Zusammenhalten eines Transportgeräts zur Beförderung von Gegenständen und/oder Personen mit einem Fahrzeug, insbesondere einem Fahrrad oder E-Bike, sowie ein Transportgerät zur Beförderung von Gegenständen und/oder Personen mit einer solchen Kupplungsanordnung.

Dabei sind dem Fachmann aus dem Stand der Technik unterschiedlichste Transportgeräte zur Beförderung von Gegenständen bekannt. Beispielsweise kennt der Fachmann Schubkarren, Transportkarren oder auch Anhänger, wie insbesondere Radanhänger. Derartige Rad- bzw. Fahrradanhänger erfreuen sich einer immer größeren Beliebtheit. Dies liegt unter anderem daran, dass die Nutzungsmöglichkeiten von Fahrradanhängern stetig erweitert werden. So gibt es Multifunktions-Kinderfahrradanhänger, die neben dem Anhängerbetrieb durch einfachen Umbau auch die Möglichkeit bieten, den Fahrradanhänger als Kinderwagen oder als sogenannten Jogger zu benutzen.

Hierfür werden für die jeweilige Funktion am Chassis des Fahrradanhängers ein Vorderrad angebracht und die Deichsel des Fahrradanhängers entfernt oder weggeklappt. Es müssen also verschiedene Teile mit dem Fahrradanhänger verbunden oder von diesem abgenommen werden. Darüber hinaus muss der Fahrradanhänger für den Betrieb als Fahrradanhänger regelmäßig an ein Fahrrad oder E-Bike angekoppelt bzw. davon abgekoppelt werden.

Derartige Kupplungsanordnungen zum Verbinden eines solchen als Fahrradanhänger ausgebildeten Transportgerätes mit einem Fahrrad kennt der Fachmann ebenfalls bereits in unterschiedlichen Ausführungen aus dem Stand der Technik. Beispielsweise gibt es im Stand der Technik Kupplungsanordnungen, die zentral unterhalb des Sattels des Fahrradrahmens oder an der Sattelstütze als Kugelkopfkupplung ausgebildet sind. Auch kenn der Fachmann Kupplungsanordnungen, die seitlich an der Hinterradgabel aus Kettenstrebe und Sattelrohr bzw. direkt am hinteren Laufrad des Fahrrads angeordnet sind.

Der Stand der Technik zu derartigen Kupplungsanordnungen ist auch in der Druckschrift 20 2004 003 968 umfänglich beschrieben. Ziel solcher Kupplungsanordnungen ist, eine sichere, möglichst verschleißfreie, spielfreie und einfach zu handhabende Verbindung zwischen dem Anhänger und der Deichsel herzustellen. Um den Einsatzbereich solcher Fahrzeuge zu erhöhen, ist es zudem wünschenswert, solche Verbindungselemente abnehmbar zu gestalten, damit sie z.B. durch solche mit einer Aufnahme für ein lenkbares oder starres Vorderrad anstelle der Deichsel ausgetauscht werden können.

Sämtlichen aus dem Stand der Technik bekannten Kupplungsanordnungen zum Verbinden und/oder Zusammenhalten eines Transportgeräts zur Beförderung von Gegenständen und/oder Personen mit einem Fahrzeug, insbesondere einem Fahrrad oder E-Bike, ist dabei gemeinsam, dass diese einen zeitaufwänden An- und Abkoppelvorgang erfordern. Ferner wird als Gelenk in der Regel eine Schraubenfeder oder ein Elastomerverbindungsstück verwendet, wodurch der Bewegungsbereich sehr eingeschränkt ist und eine hohe Abnutzung der Kupplungsanordnung vorliegt. Auch kann es durch Überlastungen zum Bruch kommen, so dass daher regelmäßig aus zusätzliche Sicherung ein Fangband vorgesehen sein muss. Nicht zuletzt kann es auf Grund vorgesehener loser Einzelteile zu einem Verlust der Teile und damit zu einer funktionsunfähigen Kupplungsanordnung kommen.

Hier setzt die vorliegende Erfindung an, deren Aufgabe es ist, eine Kupplungsanordnung zum Verbinden und/oder Zusammenhalten eines Transportgeräts zur Beförderung von Gegenständen und/oder Personen mit einem Fahrzeug, insbesondere einem Fahrrad oder E-Bike, aufzuzeigen, die die Nachteile der aus dem Stand der Technik bekannten Kupplungsanordnungen überwindet und zudem konstruktiv einfach, robust sowie sicher kuppelnd aufgebaut ist.

Zur Lösung dieser Aufgabe ist eine Kupplungsanordnung entsprechend dem Schutzanspruch 1 ausgebildet. Ein Transportgerät zur Beförderung von Gegenständen und/oder Personen mit einer solchen Kupplungsanordnung ist Gegenstand des Anspruches 17. Die Unteransprüche betreffen dabei besonders vorteilhafte Ausführungsvarianten der Erfindung.

Der wesentliche Aspekt der vorliegenden Erfindung ist darin zu sehen, eine Kupplungsanordnung zum Verbinden und/oder Zusammenhalten eines Transportgeräts zur Beförderung von Gegenständen und/oder Personen mit einem Fahrzeug, insbesondere einem Fahrrad oder E-Bike, anzugeben, zumindest aufweisend ein erstes Kupplungsteil und ein zweites Kupplungsteil, wobei das erste und zweite Kupplungsteil zusammenwirken und miteinander lösbar verbindbar sind, wobei das erste Kupplungsteil zumindest ein erstes Kupplungselement und ein erstes Befestigungselement und das zweite Kupplungsteil zumindest ein zweites Kupplungselement und ein zweites Befestigungselement aufweisen, wobei das erste Kupplungselement des ersten Kupplungsteils lösbar, jedoch fest, mit dem zweiten Kupplungselement des zweiten Kupplungsteils verbindbar ist, wobei das erste Befestigungselement des ersten Kupplungsteils direkt oder indirekt mit dem Fahrzeug und das zweite Befestigungselement des zweiten Kupplungsteils mit dem Transportgerät verbindbar ist, wobei das erste Kupplungsteil eine Gelenkeinrichtung aufweist, die das erste Kupplungselement kardanisch mit dem ersten Befestigungselement verbindet, wobei die Gelenkeinrichtung vorzugsweise zwei im Wesentlichen rechtwinklig zueinander verlaufende Gelenkachsen aufweist, und wobei das erste Kupplungselement des ersten Kupplungsteils und das zweite Kupplungselement des zweiten Kupplungsteils als derartige Steckkupplung ausgebildet sind bei der das erste oder zweite Kupplungselement ausschließlich durch ein axiales Ineinanderstecken mit dem entsprechend korrespondierenden ersten oder zweiten Kupplungselement in eine Kupplungsposition kuppelnd einrastet.

Vorteilhaft wird damit eine Kupplungsanordnung bereitgestellt, die eine stabile und sicherer Verbindung zwischen den entsprechend eingekuppelten Bauteilen schafft und zudem platzsparend und geräuscharm ausgebildet ist. Ferner ist durch die Ausgestaltung der Kupplungsanordnung als ausschließliche Steckkupplung eine Drehbarkeit um die Längsachse möglich. Ferner wird durch die als Steckkupplung ausgebildete Verbindungseinrichtung ein zeitsparendes An- und Abkuppeln sichergestellt. Überdies verzichtet die erfindungsgemäße Kupplungsanordnung durch die kardanische Anlenkung auf weitergehende Elastomerverbindungen, wodurch die Lebensdauer weitergehend erhöht wird.

Gemäß einer vorteilhaften Ausführungsvariante kann dabei vorgesehen sein, dass die kardanische Verbindung zwischen dem ersten Kupplungsteil und dem ersten Befestigungselement elastomerfrei ausgebildet ist.

Gemäß einer weiteren vorteilhaften Ausführungsvariante kann dabei vorgesehen sein, dass das erste Befestigungselement des ersten Kupplungsteils als Adapterelement zum festen, jedoch lösbaren, befestigen des ersten Kupplungsteils an dem Fahrzeug, insbesondere der Sattelstütze, dem Sitzrohr, zumindest einer Sitzstrebe, der Pletscherplatte, zumindest einer Kettenstrebe, dem Schaltauge, der Laufradachse, dem hinteren Gabelende, oder dem Gepäckträger des Fahrrads, ausgebildet ist.

Gemäß einer nochmals weiteren vorteilhaften Ausführungsvariante kann dabei vorgesehen sein, dass das erste Befestigungselement zwei Trägerbleche aufweist, die über eine Schraubverbindung eine greifende, zueinander verspannbare Verbindungseinrichtung ausbilden, und beispielsweise zum Anordnen des ersten Befestigungselementes an der Pletscherplatte eines Fahrrads vorgesehen bzw. ausgebildet sind.

Gemäß einer nochmals weiteren vorteilhaften Ausführungsvariante kann dabei vorgesehen sein, dass das erste Befestigungselement mittels der zwei Trägerbleche an dem Gepäckträger oder einem anderen Teil oder Bauteil vorzugsweise des Hinterbaus eines Fahrradrahmens eines Fahrrads angeordnet ist.

Gemäß einer nochmals weiteren vorteilhaften Ausführungsvariante kann dabei vorgesehen sein, dass die beiden Trägerbleche im Querschnitt jeweils als U-Profilelement ausgebildet sind, wobei die Schraubverbindung einen jeweiligen Basisschenkel der beiden als U-Profilelement ausgebildeten Trägerbleche verbindet.

Gemäß einer nochmals weiteren vorteilhaften Ausführungsvariante kann dabei vorgesehen sein, dass die Gelenkeinrichtung als die zwei rechtwinklig zueinander verlaufenden Gelenkachsen aufnehmendes Verbindungstück ausgebildet ist, das mit seinem ersten freien Ende zwischen beiden Seitenschenkeln des Trägerbleches mittels der ersten Gelenkachse drehbar gelagert aufgenommen ist und/oder mit seinem zweiten freien Ende um die zweite Gelenkachse drehbar gelagert an dem ersten Kupplungselement angeordnet ist.

Gemäß einer nochmals weiteren vorteilhaften Ausführungsvariante kann dabei vorgesehen sein, dass das zweite freie Ende der Gelenkeinrichtung abgerundet ausgebildet ist.

Gemäß einer nochmals weiteren vorteilhaften Ausführungsvariante kann dabei vorgesehen sein, dass zur um die zweite Gelenkachse drehbar gelagerten Anordnung des zweiten freien Endes der Gelenkeinrichtung an dem ersten Kupplungselement das erste Kupplungselement einen U-profilförmigen Befestigungsabschnitt mit einem Basisschenkel und sich jeweils seitlich sowie rechtwinklig von dem Basisschenkel erstreckende Seitenschenkel aufweist, zwischen denen die zweite Gelenkachse der Gelenkeinrichtung gelenkig aufgenommen ist.

Gemäß einer nochmals weiteren vorteilhaften Ausführungsvariante kann dabei vorgesehen sein, dass die erste und/oder zweite Gelenkachse der Gelenkeinrichtung unter Zwischenschaltung eines Lagers, beispielsweise einer Lagerhülse, an dem entsprechenden Befestigungselement und/oder Kupplungselement angeordnet ist.

Gemäß einer nochmals weiteren vorteilhaften Ausführungsvariante kann dabei vorgesehen sein, dass der Befestigungsabschnitt einteilig, insbesondere einstückig, mit dem ersten Kupplungselement ausgebildet ist und/oder das Kupplungselement den Befestigungsabschnitt und einen sich entlang einer Längsachse erstreckenden Kupplungsabschnitt aufweist, der vorzugsweise ebenfalls einteilig, insbesondere einstückig, mit dem ersten Kupplungselement ausgebildet ist.

Gemäß einer nochmals weiteren vorteilhaften Ausführungsvariante kann dabei vorgesehen sein, dass der Kupplungsabschnitt als sich entlang der Längsachse erstreckender Kupplungszapfen ausgebildet ist, der insbesondere einen sich vollumfänglich radial an der Außenmantelfläche umlaufenden Kupplungszapfenabschnitt aufweist.

Gemäß einer nochmals weiteren vorteilhaften Ausführungsvariante kann dabei vorgesehen sein, dass das erste Kupplungselement des ersten Kupplungsteils den als Kupplungszapfen ausgebildeten Kupplungsabschnitt aufweist, der durch ausschließlich axiales Ineinanderstecken mit einem als Steckmuffe ausgebildeten zweiten Kupplungselement des zweiten Kupplungsteils in der Kupplungsposition einrastet.

Gemäß einer nochmals weiteren vorteilhaften Ausführungsvariante kann dabei vorgesehen sein, dass das zweite Kupplungselement des zweiten Kupplungsteils die Steckmuffe aufweist, in die der als Kupplungszapfen ausgebildete Kupplungsabschnitt des ersten Kupplungselementes durch ausschließlich axiales Verschieben in der Kupplungsposition verrastend einschiebbar ist.

Gemäß einer nochmals weiteren vorteilhaften Ausführungsvariante kann dabei vorgesehen sein, dass die Steckmuffe als Schiebemuffe mit einer entgegen einer Federbelastung in axialer Richtung, also entlang der Längsachse, verschiebbaren Schiebhülse ausgebildet ist, durch die zumindest eine in der Steckmuffe vorgesehene Sperrkugel entriegelt und in der Kupplungsposition durch wiederum axiales Verschieben der Schiebhülse mit dem als Kupplungszapfen ausgebildeten Kupplungsabschnitt verrastend verriegelt.

Gemäß einer nochmals weiteren vorteilhaften Ausführungsvariante kann dabei vorgesehen sein, dass in der Kupplungsposition das erste Kupplungselement des ersten Kupplungsteils relativ zu dem zweiten Kupplungselement des zweiten Kupplungsteils um die Längsachse drehbar ausgebildet ist.

Gemäß einer nochmals weiteren vorteilhaften Ausführungsvariante kann dabei vorgesehen sein, dass das zweite Befestigungselement ein Kupplungsgestänge sowie eine Klemmvorrichtung aufweist, die das zweite Kupplungselement mit dem Transportgerät verbindet.

Gemäß einer nochmals weiteren vorteilhaften Ausführungsvariante kann dabei vorgesehen sein, dass mittels der Klemmvorrichtung die Kupplungsanordnung an beispielsweise der Deichsel oder einem Griffelement des Transportgerätes fest, jedoch lösbar, angeordnet ist.

Gemäß einer nochmals weiteren vorteilhaften Ausführungsvariante kann dabei vorgesehen sein, dass die Klemmvorrichtung zwei Klemmschalen aufweist, die gegenseitig mittel Schraubverbindungen klemmbar ausgebildet sind und/oder die Klemmvorrichtung über eine Schraubverbindung lösbar an dem Kupplungsgestänge vorgesehen ist.

Gemäß einem weiteren Aspekt betrifft die vorliegende Erfindung ein Transportgerät, insbesondere Fahrradanhänger, zur Beförderung von Gegenständen und/oder Personen, umfassend zumindest eine Kupplungsanordnung zum Verbinden und/oder Zusammenhalten des Transportgeräts mit einem Fahrzeug, insbesondere einem Fahrrad oder E-Bike, gemäß einem der vorangehenden Aspekte.

Gemäß einer vorteilhaften Ausführungsvariante umfasst das Transportgerät zumindest einen Transportbehälter zur Aufnahme der Gegenstände, ein an dem Transportbehälter zwischen einer Fahrposition und einer Standposition um eine erste Schwenkachse verschwenkbar angeordnetes Fahrwerk mit wenigstens zwei Laufrädern, wobei das Transportgerät zumindest in der Fahrposition des Fahrwerks auf einer Ebene mittels der Laufräder fahrbar abgestützt ist, während das Transportgerät in der Standposition des Fahrwerks auf der Ebene zumindest abschnittweise aufliegt, wobei das verschwenkbare Fahrwerk zur Einleitung der Schwenkbewegung um die erste Schwenkachse über zumindest einen Stellhebel mit einer um zumindest eine zweite Schwenkachse schwenkbaren Hebelmechanik zwangsgekoppelt ist, die zwischen einer ersten Position und einer zweiten Position um die zumindest eine zweite Schwenkachse derart schwenkbar ausgebildet ist, dass die Hebelmechanik in der ersten Position das Fahrwerk in die Standposition und in der zweiten Position in die Fahrposition jeweils lagefixiert verschwenkt. Damit wird ein Transportgerät geschaffen, das einfach und robust aufgebaut ist und zudem platzsparend gelagert werden kann, da mehrere solcher Transportgeräte in ihrer jeweiligen Standposition übereinander gestapelt werden können. Zudem handelt es sich bei dem Transportgerät um ein sehr universell, für die unterschiedlichsten Gegenstände zum Transport einsetzbares Gerät, das vom Einkauf in Supermärkten bis hin zu Forschungs- und Expeditionsreisen verwendet werden kann. Insbesondere eignet sich in diesem Zusammenhang ein Transportbehälter in Form eine Aluminiumkiste bzw. Aluminiumbox mit einem daran gelenk angeordneten, klappbaren Deckel, der beispielsweise über einen Dichtungsring in seinem geschlossenen Zustand die Gegenstände vor äußeren Umwelteinflüssen in dem Transportbehälter geschützt aufbewahrt.

Gemäß einer vorteilhaften Ausführungsvariante kann dabei vorgesehen sein, dass der Transportbehälter gehäuseartig ausgebildet ist und einen Behälterboden, mehrere umlaufend angeordnete Behälterseitenwände und einen Deckel aufweist.

Gemäß einer weiteren vorteilhaften Ausführungsvariante kann dabei vorgesehen sein, dass der Transportbehälter wasserdicht oder spritzwassergeschützt ausgebildet ist.

Gemäß einer nochmals weiteren vorteilhaften Ausführungsvariante kann dabei vorgesehen sein, dass der Transportbehälter aus einem korrosionsbeständigen und/oder formstabilen Material, insbesondere Aluminium, verzinktem Blech oder einem Polymer, hergestellt ist.

Gemäß einer nochmals weiteren vorteilhaften Ausführungsvariante kann dabei vorgesehen sein, dass an dem Transportbehälter zumindest ein klappbarer Tragegriff angeordnet ist.

Gemäß einer nochmals weiteren vorteilhaften Ausführungsvariante kann dabei vorgesehen sein, dass an einer Unterseite des Behälterbodens zumindest ein den Transportbehälter abstützender Standfuß und/oder ein weiterer, klappbarer Standfuß vorgesehen sind.

Gemäß einer nochmals weiteren vorteilhaften Ausführungsvariante kann dabei vorgesehen sein, dass das Fahrwerk zumindest einen Schwenkhebel aufweist, der im Wesentlichen Y-förmig ausgebildet ist und in seinen jeweiligen freien Randbereichen der entsprechenden Längserstreckung der Y-Form einen Anlenkungsabschnitt aufweist.

Gemäß einer nochmals weiteren vorteilhaften Ausführungsvariante kann dabei vorgesehen sein, dass die erste Schwenkachse drehbar an dem jeweiligen ersten Anlenkungsabschnitt des entsprechenden Schwenkhebels aufgenommen ist, während an dem jeweiligen zweiten Anlenkungsabschnitt jeweils ein Stellhebel drehbar angebunden ist.

Gemäß einer nochmals weiteren vorteilhaften Ausführungsvariante kann dabei vorgesehen sein, dass an dem jeweiligen dritten Anlenkungsabschnitt des entsprechenden Schwenkhebels die wenigstens zwei Laufräder des Fahrwerks um eine jeweilige Drehachse drehbar gelagert aufgenommen sind.

Gemäß einer nochmals weiteren vorteilhaften Ausführungsvariante kann dabei vorgesehen sein, dass die Laufräder an dem jeweiligen dritten Anlenkungsabschnitt zu dem ersten Anlenkungsabschnitt beabstandet vorgesehen sind, und zwar derart, dass die Drehachsen der Laufräder in der Fahrposition des Fahrwerks mittig oder näherungsweise mittig zwischen der als Rückwand ausgebildeten Behälterseitenwand und der als Vorderwand ausgebildeten Seitenwand vorgesehen sind.

Gemäß einer nochmals weiteren vorteilhaften Ausführungsvariante kann dabei vorgesehen sein, dass über den jeweiligen Schwenkhebel eine Einzelradaufhängung für die Laufräder des Fahrwerks ausgebildet ist.

Gemäß einer nochmals weiteren vorteilhaften Ausführungsvariante kann dabei vorgesehen sein, dass das Fahrwerk mittels des zumindest einen Stellhebels eine Federung für die Laufräder ausbildet, indem der Stellhebel zweiteilig ausgebildet ist und jeweils ein erstes mit der Hebelmechanik zwangsgekoppeltes Stellhebelelement sowie ein zu dem ersten Stellhebelelement entlang der Längsstreckung des Stellhebels verschiebbar ausgebildetes zweiten Stellhebelelement aufweist, das unter einer Federspannung verschiebbar an dem ersten Stellhebelelement angebunden ist.

Gemäß einer nochmals weiteren vorteilhaften Ausführungsvariante kann dabei vorgesehen sein, dass die Hebelmechanik eine Deichsel für das Transportgerät ausbildet, die ein Griffelement aufweist, an dem das Transportgerät bewegt, insbesondere geschoben und/oder gezogen, werden kann.

Gemäß einer nochmals weiteren vorteilhaften Ausführungsvariante kann dabei vorgesehen sein, dass das Fahrwerk und/oder die Hebelmechanik spiegelsymmetrisch zu einer Mittelebene ausgebildet sind und jeweils einen rechten Fahrwerkteil bzw. Hebelmechanikteil und/oder einen linken Fahrwerkteil bzw. Hebelmechanikteil aufweisen.

Gemäß einer nochmals weiteren vorteilhaften Ausführungsvariante kann dabei vorgesehen sein, dass die Hebelmechanik zumindest ein an dem Transportbehälter fest angeordnetes Befestigungselement, ein erstes Stellelement, eine zweites, sowie ein drittes Stellelement aufweist, wobei an dem Befestigungselement das erste Stellelement mit einem ersten Endbereich um die zweite Schwenkachse drehbar angelenkt angeordnet ist, wobei an dem ersten Stellelement zudem der Stellhebel gelenkig vorgesehen ist und an dem ersten Stellelement an dem der zweiten Schwenkachse gegenüberliegenden zweiten Endbereich eine dritte Schwenkachse ausgebildet ist, an der das zweite Stellelement um eine dritte Schwenkachse drehbar angeordnet ist.

Gemäß einer nochmals weiteren vorteilhaften Ausführungsvariante kann dabei vorgesehen sein, dass oberhalb des ersten Stellelementes und zu diesem beabstandet das dritte Stellelement an dem Befestigungselement um eine vierte Schenkachse drehbar mit einem ersten Bereich angeordnet ist, während der dem ersten Endbereich gegenüberliegende zweite Endbereich um eine fünfte Schwenkachse drehbar an dem zweiten Stellelement angeordnet ist.

Gemäß einer nochmals weiteren vorteilhaften Ausführungsvariante kann dabei vorgesehen sein, dass erste das Stellelement und dritte Stellelement untereinander parallelogrammförmig an dem Befestigungselement bzw. dem zweiten Stellelement angeordnet sind.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates) wie z. B. einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Die Erfindung wird im Folgenden anhand der Figuren an Ausführungsbeispielen näher erläutert. Es zeigen:

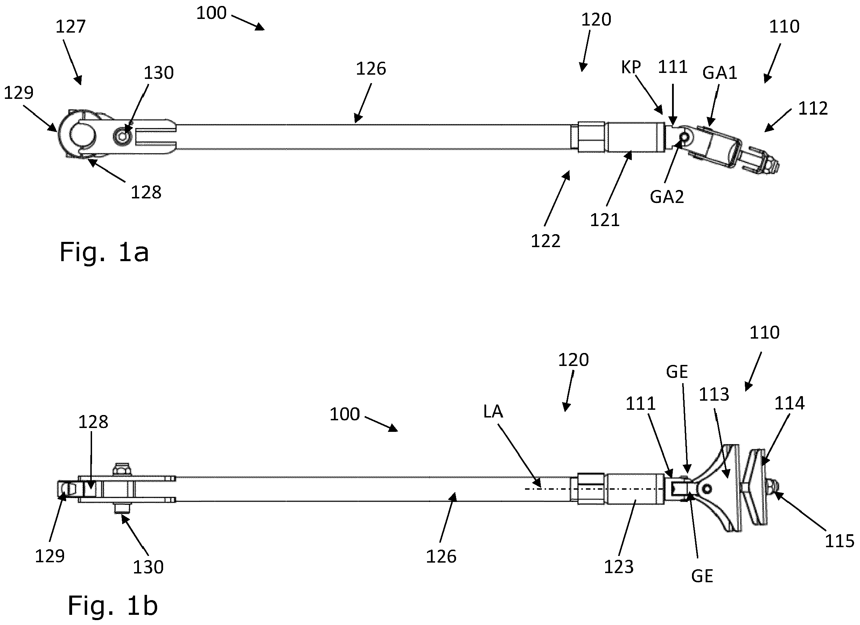

- Fig. 1a und 1b: in jeweils schematischer Darstellung eine beispielhafte Ausführungsvariante einer erfindungsgemäßen Kupplungsanordnung,

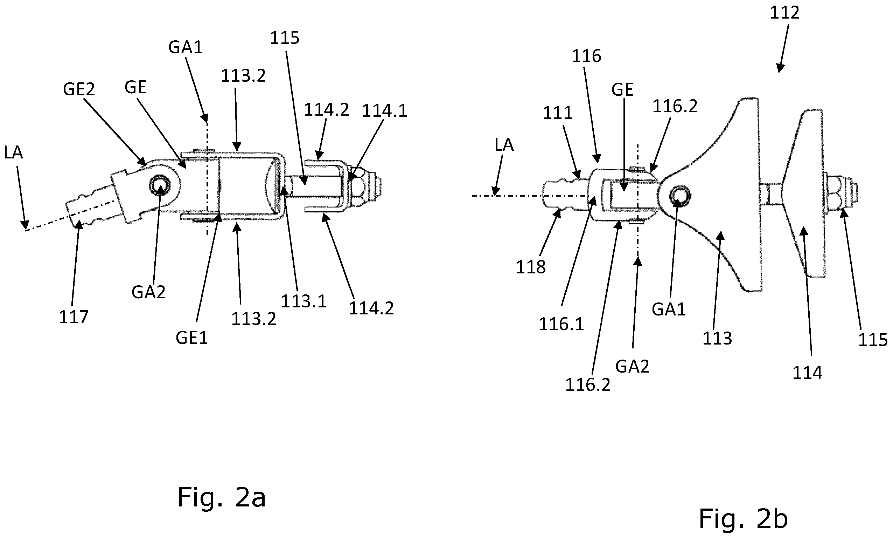

- Fig. 2a und 2b: in jeweils schematischer Darstellung eine beispielhafte Ausführungsvariante eines freigestellten ersten Kupplungsteils,

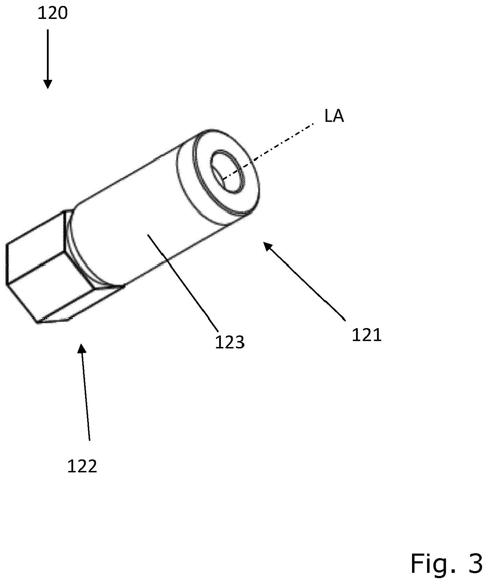

- Fig. 3: in schematischer Perspektivdarstellung eine beispielhafte Ausführungsvariante eines freigestellten, teilweise dargestellten zweiten Kupplungsteils,
- Fig. 4: in vereinfachter Seitenansicht eine beispielhafte Ausführungsvariante eines Transportgerätes in einer Fahrposition mit einer beispielhaften Ausführungsvariante der erfindungsgemäßen Kupplungsanordnung;
- Fig. 5: das in der Figur 4 gezeigte Transportgerät in einer Standposition;
- Fig. 6: in vereinfachter Darstellung eine Rückansicht des Transportgerätes der Figur 4;
- Fig. 7a und 7b: eine vereinfachte Ansicht einer freigestellten Hebelmechanik des erfindungsgemäßen Transportgerätes in der ersten Position und
- Fig. 8a und 8b: eine vereinfachte Ansicht der freigestellten Hebelmechanik der Figuren 7a und b in einer zweiten Position.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

Die in den Figuren allgemein mit 100 bezeichnete Kupplungsanordnung ist dabei zum Verbinden und/oder Zusammenhalten eines Transportgeräts 1 zur Beförderung von Gegenständen G und/oder Personen mit einem Fahrzeug (in den Figuren nicht dargestellt), insbesondere einem Fahrrad oder E-Bike, ausgebildet. Bei den Gegenständen G kann es sich dabei um Gegenstände G wie beispielsweise Dinge des täglichen Bedarfs, wie Lebensmittel, Sportartikel, Reisequipment, Werkzeug, Foto- bzw. Filmausrüstung oder Musikinstrumente handeln. Dabei ist dies eine nicht abschließende, beispielhafte Aufzählung von möglichen Gegenständen G. Darüber hinaus handelt es sich besonders vorteilhaft bei dem Transportgerät 1 um einen Hänger bzw. Anhänger, insbesondere einen Fahrradanhänger zum Transport von Personen und/oder Gegenständen G.

Auch Fahrradanhänger 1 werden für den Transport von Gegenständen G bzw. Gütern und/oder Personen verwendet, wobei die zu transportierenden Gegenstände G und/oder Personen auf der Lade- oder Sitzfläche des Fahrradanhängers 1 platziert werden.

Zum Ziehen eines solchen Transportgerätes 1 wird entweder eine Deichsel 16 an einem Fahrzeugteil mittels einer erfindungsgemäßen Kupplungsanordnung 100 befestigt oder aber alternativ die Kupplungsanordnung 100 direkt, also ohne Zwischenschaltung einer Deichsel 16, an dem Transportgerät 1 angeordnet.

In anderen Worten kann also die erfindungsgemäße Kupplungsanordnung 100 auch die Funktion der Deichsel 16 mit übernehmen und dient dann in einer solchen Ausführungsvariante nicht nur zum Übertragen von Kräften zwischen dem Fahrzeug und dem Transportgerät 1, sondern definiert zudem auch einen vorgegebenen Abstand zwischen dem Transportgerät 1 und dem vorausfahrenden Fahrzeug. Die Kupplungsanordnung 100 verhindert damit insbesondere auch, dass das Transportgerät 1 auf das vorausfahrende Fahrzeug auflaufen kann.

Hierfür weist die Kupplungsanordnung 100 zumindest ein erstes Kupplungsteil 110 und ein zweites Kupplungsteil 120 auf, wobei das erste und zweite Kupplungsteil 110, 120 vorzugsweise kuppelnd zusammenwirken und miteinander lösbar verbindbar sind. Insbesondere sind die beiden Kupplungsteile 110, 120 in einer Kupplungsposition KP kuppend verbunden. Unter einer kuppelnden Verbindung wird ein Zustand der Kupplungsanordnung 100 verstanden, in dem das erste und zweite Kupplungsteil 110, 120 zusammenhalten.

Ferner weist das erste Kupplungsteil 110 zumindest ein erstes Kupplungselement 111 und ein erstes Befestigungselement 112 auf, während das zweite Kupplungsteil 120 zumindest ein zweites Kupplungselement 121 und ein zweites Befestigungselement 122 aufweist.

Mithin ist das erste Kupplungselement 111 des ersten Kupplungsteils 110 lösbar, jedoch fest, mit dem zweiten Kupplungselement 121 des zweiten Kupplungsteils 120 verbindbar, insbesondere in der Kupplungsposition KP verbunden, während das erste Befestigungselement 112 des ersten Kupplungsteils 110 direkt oder indirekt mit dem Fahrzeug verbindbar, insbesondere fest, jedoch lösbar, angeordnet ist und das zweite Befestigungselement 122 des zweiten Kupplungsteils 120 direkt oder indirekt mit dem Transportgerät 1 verbindbar, insbesondere fest, jedoch lösbar, angeordnet ist.

Überdies weist das erste Kupplungsteil 110 eine Gelenkeinrichtung GE auf, die das erste Kupplungselement 111 kardanisch mit dem ersten Befestigungselement 112 verbindet, wobei die Gelenkeinrichtung GE vorzugsweise zwei im Wesentlichen rechtwinklig zueinander verlaufende Gelenkachsen GA1, GA2 aufweist, bzw. ausbildet. Insbesondere ist mittels der im Wesentlichen rechtwinklig zueinander verlaufenden, bzw. sich rechtwinklig schneidenden Gelenkachsen GA1 und GA2 die kardanische Verbindung hergestellt.

Insbesondere ist die kardanische Verbindung zwischen dem ersten Kupplungselement 111 und dem ersten Befestigungselement 112 elastomerfrei, also ohne Vorsehen von Elastomerverbindungsstücken bzw. Elastomerbauteilen, ausgebildet.

Das erste Kupplungsteil 110 ist in der vorliegenden Ausführungsvariante dem Fahrzeug, insbesondere dem in den Figuren nicht nähergehend dargestellten Fahrrad, zugeordnet und mehr im Detail mittels des ersten Befestigungselementes 112 des ersten Kupplungsteils 110 ortsfest, beispielsweise mit der Sattelstütze, dem Sitzrohr, zumindest einer Sitzstrebe, der Pletscherplatte, zumindest einer Kettenstrebe, dem Schaltauge, der Laufradachse, dem hinteren Gabelende, oder dem Gepäckträger des Fahrrads verbunden. Zwar ist das erste Kupplungsteil 110 zum Verbleib an dem Fahrzeug, auch im ausgekuppelten Zustand der Kupplungsanordnung 100, vorgesehen und gedacht, jedoch kann das erste Kupplungsteil 110 vorteilhaft fest, jedoch lösbar, an dem Fahrzeug vorgesehen, insbesondere angeordnet sein.

Dabei kann das erste Befestigungselement 112 des ersten Kupplungsteils 110 als Adapterelement zum festen, jedoch lösbaren, Anordnen des ersten Kupplungsteils an dem Fahrzeug, insbesondere der Sattelstütze, dem Sitzrohr, zumindest einer Sitzstrebe, der Pletscherplatte, zumindest einer Kettenstrebe, dem Schaltauge, der Laufradachse, dem hinteren Gabelende, oder dem Gepäckträger des Fahrrads, ausgebildet sein.

In der gezeigten Ausführungsvariante der Figuren besteht das erste Kupplungsteil 110 aus dem ersten Kupplungselement 111, der Gelenkeinrichtung GE sowie dem Befestigungselement 112, wobei das erste Kupplungselement 111 über die Gelenkeinrichtung GE kardanisch, also um die erste und zweite rechtwinklig zueinander verlaufende Gelenkachse GA1, GA2 mit dem Befestigungselement 112 verbunden ist.

Mehr im Detail kann das erste Befestigungselement 112 beispielsweise zwei Trägerbleche 113, 114, aufweisen, die über eine Schraubverbindung 115 eine greifende, zueinander verspannbare Verbindungseinrichtung ausbilden, und beispielsweise zum Anordnen des ersten Befestigungselementes 112 an der Pletscherplatte eines Fahrrads vorgesehen bzw. ausgebildet sind. Auch kann das erste Befestigungselement 112 mittels der zwei Trägerbleche 113 und 114 an dem Gepäckträger oder einem anderen Teil oder Bauteil vorzugsweise des Hinterbaus eines Fahrradrahmens eines Fahrrads angeordnet werden. Insbesondere kann das erste Befestigungselement 112 mittels der zwei Trägerbleche 113 und 114 auch an der Sattelstütze, dem Sitzrohr, zumindest einer Sitzstrebe, zumindest einer Kettenstrebe, dem Schaltauge, der Laufradachse, oder dem hinteren Gabelende greifend angeordnet sein.

Vorteilhaft können die beiden Trägerbleche 113, 114 im Querschnitt jeweils als U-Profilelement ausgebildet sein, wobei die Schraubverbindung 115 einen jeweiligen Basisschenkel 113.1, 114.1 der beiden als U-Profilelement ausgebildeten Trägerbleche 113, 114 verbindet. Als jeweiliger Basisschenkel 113.1, 114.1 wird dabei derjenige Schenkel des U-Profilelementes verstanden, an dem die beiden im Wesentlichen parallel zueinander verlaufenden Seitenschenkel 113.2, 114.2 angeordnet sind. Die Seitenschenkel 113.2, 114.2 verlaufen im Querschnitt im Wesentlichen rechtwinklig zu dem jeweiligen Basisschenkel 113.1, 114.1. In anderen Worten weist also ein jedes Trägerblech 113, 114, jeweils zwei zueinander im Querschnitt parallel zueinander verlaufende Seitenschenkel 113.2, 114.2 sowie einen diese Seitenschenkel 113.2, 114.2 rechtwinklig verbindenden Basisschenkel 113.1, 114.1 auf.

Die Gelenkeinrichtung GE kann dabei als die zwei rechtwinklig zueinander verlaufenden Gelenkachsen GA1 und GA2 aufnehmendes Verbindungstück ausgebildet sein, das mit seinem ersten freien Ende GE1 zwischen den beiden Seitenschenkeln 113.2 des Trägerbleches 113 mittels der ersten Gelenkachse GA1 drehbar gelagert aufgenommen ist und mit seinem zweiten freien Ende GE2 um die zweite Gelenkachse GA2 drehbar gelagert an dem ersten Kupplungselement 111 angeordnet ist.

Das zweite freie Ende GE2 der Gelenkeinrichtung GE kann dabei abgerundet ausgebildet sein.

Zur um die zweite Gelenkachse GA2 drehbar gelagerten Anordnung des zweiten freien Endes GE2 der Gelenkeinrichtung GE an dem ersten Kupplungselement 111 kann das erste Kupplungselement 111 einen U-profilförmigen Befestigungsabschnitt 116 mit einem Basisschenkel 116.1 und sich jeweils seitlich sowie rechtwinklig von dem Basisschenkel 116.1 erstreckende Seitenschenkel 116.2 aufweisen, zwischen denen (Seitenschenkel 116.2) die zweite Gelenkachse GA2 der Gelenkeinrichtung GA gelenkig aufgenommen ist.

Dabei kann die erste und/oder zweite Gelenkachse GA1, GA2 der Gelenkeinrichtung unter Zwischenschaltung eines Lagers, beispielsweise einer Lagerhülse, an dem entsprechenden Befestigungselement 112 und/oder Kupplungselement 111 angeordnet sein.

Insbesondere kann der Befestigungsabschnitt 116 einteilig, insbesondere einstückig, mit dem ersten Kupplungselement 111 ausgebildet sein. Mehr im Detail kann das Kupplungselement 111 den Befestigungsabschnitt 116 und einen sich entlang einer Längsachse LA erstreckenden Kupplungsabschnitt 117 aufweisen, der vorzugsweise ebenfalls einteilig, insbesondere einstückig, mit dem ersten Kupplungselement 111 ausgebildet ist.

Dabei kann der Kupplungsabschnitt 117 als sich entlang der Längsachse LA erstreckender Kupplungszapfen ausgebildet sein, der insbesondere einen sich vollumfänglich radial an der Außenmantelfläche umlaufenden Kupplungszapfenabschnitt 118 aufweist, der eine Art Vorsprung gegenüber der restlichen Außenmantelfläche ausbildet. Vorteilhaft kann der Kupplungsabschnitt 117 des Kupplungselements 111 rotationssymmetrisch zu der Längsachse LA ausgebildet sein.

Mithin sind das erste Kupplungselement 111 des ersten Kupplungsteils 110 und das zweite Kupplungselement 121 des zweiten Kupplungsteils 120 als derartige Steckkupplung ausgebildet, bei der das erste oder zweite Kupplungselement 111, 121 ausschließlich durch ein axiales Ineinanderstecken mit dem entsprechend korrespondierenden ersten oder zweiten Kupplungselement 111, 121 in der Kupplungsposition KP kuppelnd einrastet.

Die vorliegenden Figuren zeigen eine Ausführungsvariante der Erfindung, bei der das erste Kupplungselement 111 des ersten Kupplungsteils 110 den als Kupplungszapfen 118 ausgebildeten Kupplungsabschnitt 117 aufweist, der durch ausschließlich axiales, also entlang der Längsachse LA verlaufendes, Ineinanderstecken mit einer als Steckmuffe 123 ausgebildeten zweiten Kupplungselements 121 des zweiten Kupplungsteils 120 in der Kupplungsposition KP einrastet.

Gemäß einer weiteren, nicht gezeigten Ausführungsvariante könnte jedoch auch vorgesehen sein, dass das erste Kupplungselement 111 des ersten Kupplungsteils 110 als Steckmuffe ausgebildet ist, in die der als Kupplungszapfen ausgebildete zweite Kupplungsteil 121 des zweiten Kupplungselementes 120 in der Kupplungsposition KP ausschließlich durch axiales Verschieben des Kupplungszapfens relativ zu der Steckmuffe einrastet.

In anderen Worten kann also das erste Kupplungselement 111 den Kupplungszapfen oder die Steckmuffe aufweisen, oder aber das zweite Kupplungselement 121 weist die Steckmuffe oder den Kupplungszapfen auf.

In der gezeigten Ausführungsvariante der Figuren weist das zweite Kupplungselement 121 des zweiten Kupplungsteils 120 die Steckmuffe 123 auf, die sich vorzugsweise in der Kuppelposition KP in ihrer Längserstreckung entlang der Längsachse LA erstreckt. Dabei kann der als Kupplungszapfen ausgebildete Kupplungsabschnitt 117 des ersten Kupplungselementes 111 durch ausschließlich axiales, also entlang der Längsachse LA gerichtetes, Verschieben in das als Steckmuffe 123 ausgebildete zweite Kupplungselement 121 in der Kupplungsposition KP verrastend eingeschoben werden.

Hierfür kann die Steckmuffe 123 insbesondere als Schiebemuffe mit einer entgegen einer Federbelastung in axialer Richtung, also entlang der Längsachse LA, verschiebbaren Schiebhülse ausgebildet sein, durch die zumindest eine in der Steckmuffe 123 vorgesehene Sperrkugel entriegelt und in der Kupplungsposition KP durch wiederum axiales Verschieben der Schiebhülse mit dem als Kupplungszapfen ausgebildeten Kupplungsabschnitt 117 verrastend verriegelt wird.

Dabei kann sich auch in der Kupplungsposition KP das erste Kupplungselement 111 des ersten Kupplungsteils 110 relativ zu dem zweiten Kupplungselement 121 des zweiten Kupplungsteils 120 um die Längsachse LA drehen. In anderen Worten lässt also die Kupplungsanordnung 100 eine Rotation bzw. Drehbewegung des ersten Kupplungsteils 110 relativ zu dem zweiten Kupplungsteil 120 auch in der Kupplungsposition KP um die Längsachse LA als Rotationsache zu.

Wie bereits erwähnt, kann das zweite Befestigungselement 122 des zweiten Kupplungsteils 120 direkt oder indirekt mit dem Transportgerät 1 verbunden sein. Insbesondere kann das zweite Befestigungselement 122 ein Kupplungsgestänge 126 sowie eine Klemmvorrichtung 127 aufweisen, das das zweite Kupplungselement 121 mit dem Transportgerät 1 verbindet. Beispielweise kann hierfür die Steckmuffe 123 an das erste freie Ende des Kupplungsgestänges 126 angeschraubt werden und an dem zweiten freien Ende des Kupplungsgestänges 126 die Klemmvorrichtung 127 vorgesehen sein. Dabei können das Kupplungsgestänge 126 und die Klemmvorrichtung 127 als Teil oder Bestandteil des zweiten Befestigungselementes 122 ausgebildet sein. Mittels der Klemmvorrichtung 127 kann dabei die Kupplungsanordnung 100 an beispielsweise der Deichsel 16, insbesondere einem Griffelement 22, des Transportgerätes 1 fest, jedoch lösbar, angeordnet sein.

Die Klemmvorrichtung 127 kann hierfür zwei Klemmschalen 128, 129 aufweisen, die gegenseitig mittel Schraubverbindungen geklemmt werden können. Die Klemmvorrichtung 127 kann dabei über eine Schraubverbindung 130 lösbar an dem Kupplungsgestänge 127 vorgesehen sein.

In einer nicht gezeigten, alternativen Ausführungsvariante kann das zweite Befestigungselement 122 auch direkt an dem Transportgerät 1, insbesondere dessen Deichsel 16, angeordnet sein. Das zweite Befestigungselement 122 kann hierfür beispielsweise ein Schraubgewinde sein, das an der gegenüberliegenden Seite des Steckmuffe 123 ausgebildet ist, und mittels dem das zweite Kupplungsteil 120 mit einem korrespondierendem Schraubgewinde an dem Transportgerät 1, beispielsweise an der Deichsel 16, lösbar angeschraubt wird.

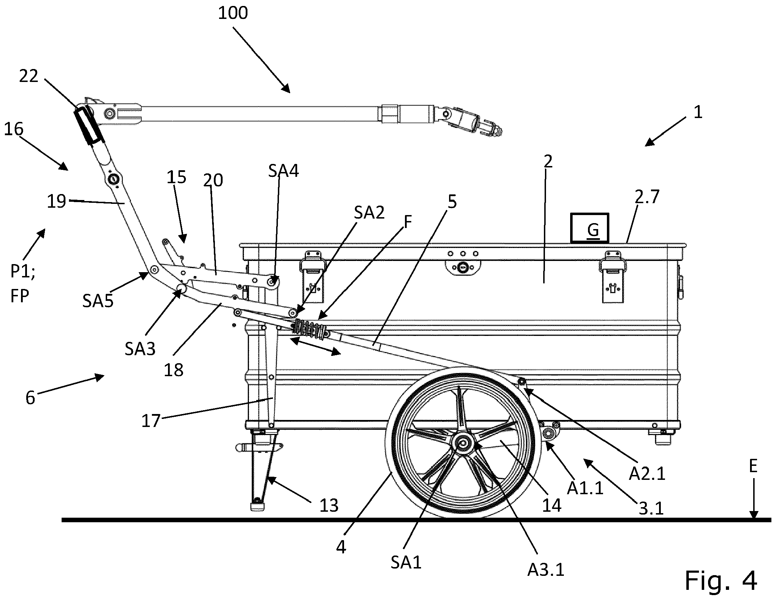

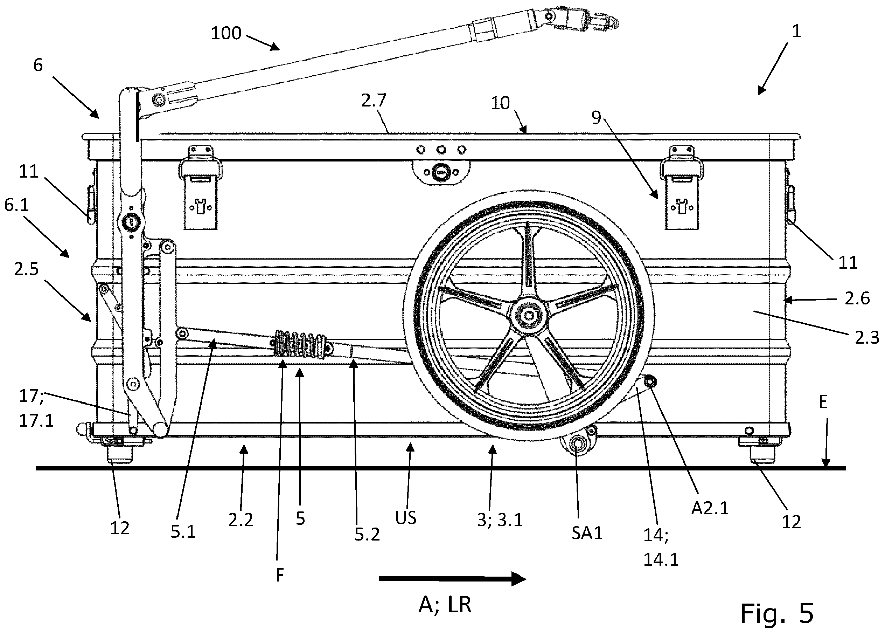

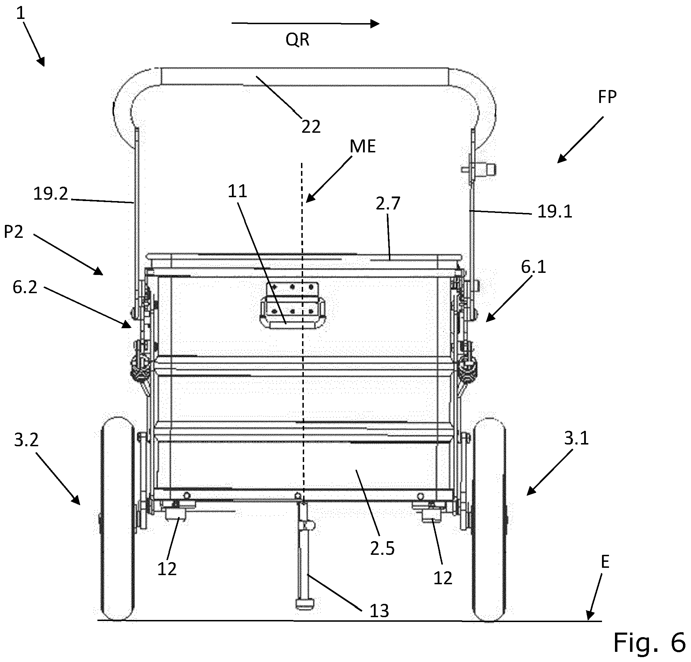

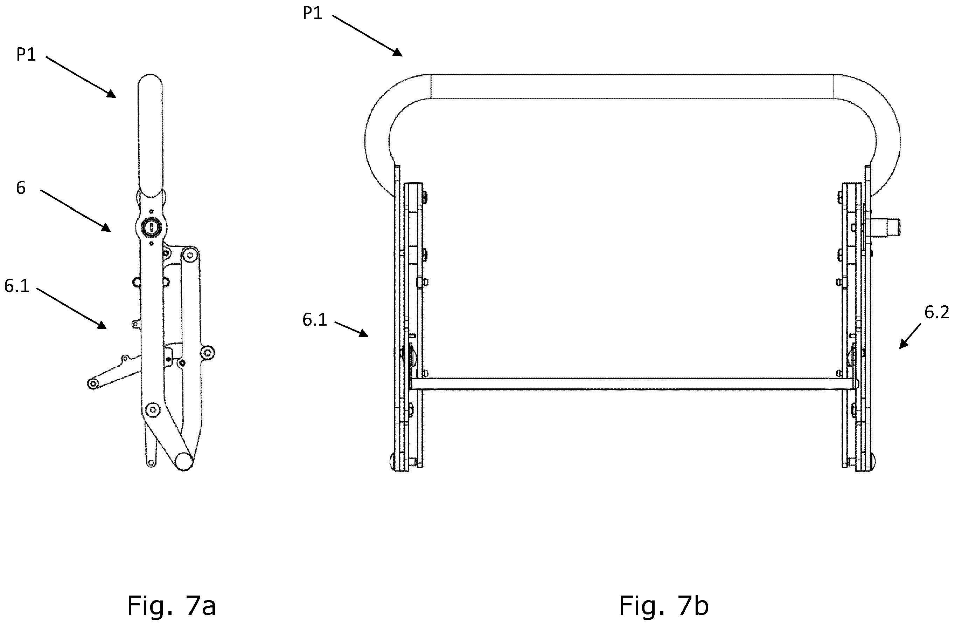

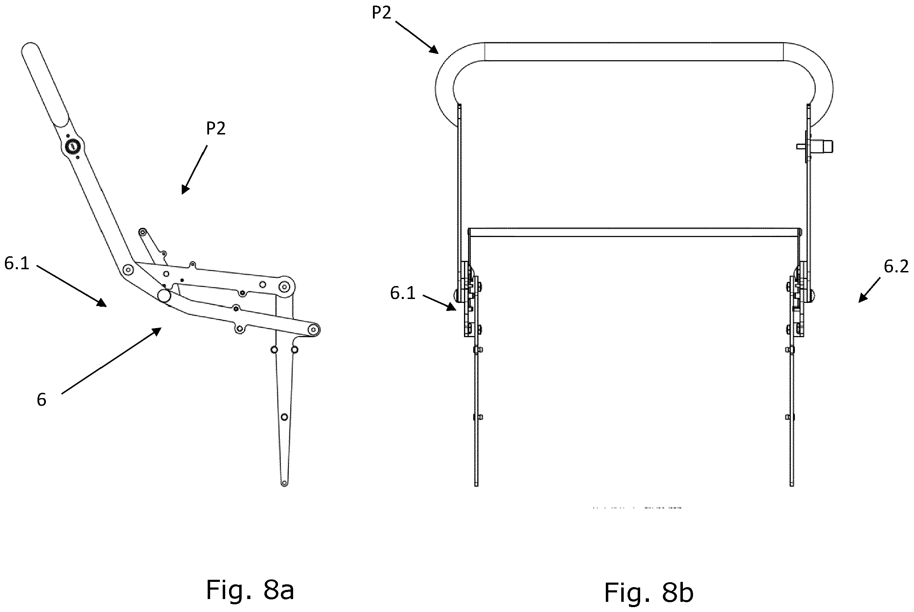

Das in den Figuren allgemein mit 1 bezeichnete Transportgerät ist dabei beispielhaft zur Beförderung von Gegenständen G wie beispielsweise Dinge des täglichen Bedarfs, wie Lebensmittel, Sportartikel, Reisequipment, Werkzeug, Foto- bzw. Filmausrüstung oder Musikinstrumente gezeigt und beschrieben. Ebenso könnte es sich dabei jedoch auch um einen Fahrradanhänger zur Beförderungen von Personen und/oder Gegenständen G handeln. Das Wesen der vorliegenden Erfindung ist dabei insbesondere nicht auf das in den Figuren 4 bis 8 beispielhaft gezeigte Transportgerät 1 beschränkt, sondern vielmehr auch auf Anhänger, insbesondere Radanhänger anwendbar.

Wie ebenfalls aus den Figuren ersichtlich, ist dabei die Kupplungsanordnung 100 mittels ihres zweiten Befestigungselements 122 an der Deichsel 16 des Transportgerätes 1 angeordnet. Ebenso wäre es möglich und denkbar, dass die Kupplungsanordnung 100 selbst die Funktion der Deichsel 16 übernimmt, und mittels des zweiten Befestigungselements 122 insbesondere ohne Zwischenschaltung der Deichsel 16 unmittelbar an dem Transportgerät 1, beispielsweise an dessen Fahrwerk 3 oder Transportbehälter 2, befestigt ist.

Hierbei umfasst das Transportgerät 1 zumindest eine als Transportbehälter ausgebildete Transporteinrichtung 2 zur Aufnahme der Gegenstände G und/oder Personen. Der Transportbehälter 2 kann dabei gehäuseartig ausgebildet sein und einen Behälterboden 2.2 und mehrere umlaufend angeordnete Behälterseitenwände 2.3 - 2.6 aufweisen, die vom Behälterboden 2.2 vorzugsweise rechtwinklig abstehen und einen Behälterinnenraum umgeben bzw. definieren. Im Behälterinnenraum können dabei die Gegenstände G aufgenommen werden.

Mehr im Detail kann dabei vorgesehen sein, dass der Transportbehälter 2 durch vier Behälterseitenwände 2.3 - 2.6 umgeben ist, wobei jeweils zwei Behälterseitenwände als Längsseitenwände 2.3, 2.4 und die zwei weiteren Behälterseitenwände 2.5, 2.6 als Querseitenwände ausgebildet sind, so dass der Transportbehälter 2 eine im Wesentlichen rechteckförmige Grundform aufweist. Die Längsseitenwände 2.3, 2.4 erstrecken sich dabei entlang einer Längsrichtung LR und die Querseitenwände 2.5, 2.6 entlang einer Querrichtung QR, wobei die Längsrichtung LR mit einer Fahrrichtung A des Transportgerätes 1 zusammenfällt und die Querrichtung QR lotrecht zur Längsrichtung LR ausgerichtet ist. Insbesondere bildet dabei die Fahrrichtung A eine Schubrichtung sowie eine der Fahrrichtung A entgegengesetzte Fahrrichtung eine Zugrichtung für das Transportgerät 1 aus. Beide Fahrrichtungen sind dabei mit dem Transportgerät 1 möglich.

Insbesondere bildet dabei in einer Fahrrichtung A des Transportgerätes 1 gesehen die als Querseitenwand ausgebildete Behälterseitenwand 2.5 eine Rückwand und die als Querseitenwand ausgebildete Behälterseitenwand 2.6 eine Vorderwand des Transportbehälters 2 aus. Ferner bildet die als Längsseitenwand ausgebildete Behälterseitenwand 2.3 eine in Fahrrichtung A des Transportgerätes 1 gesehene rechte Behälterseitenwand und die als Längsseitenwand ausgebildete Behälterseitenwand 2.4 eine linke Behälterseitenwand.

Dabei kann der Transportbehälter 2 wasserdicht oder spritzwassergeschützt ausgebildet sein, und in einer bevorzugten Ausführungsvariante einen zu öffnenden Deckel 2.7 aufweisen, der an dem durch den Behälterboden 2.2 und die Behälterseitenwände 2.3 - 2.6 gebildeten Grundelement des Transportbehälters 2 klappbar angeordnet ist. Vorzugsweise ist der Deckel 2.7 mittels nicht nähergehend dargestellten Scharnieren an einer der Behälterseitenwände 2.3 - 2.6 mit dem Transportbehälter 2 verbunden, so dass der Deckel 2.7 auf- und zugeklappt werden kann und dadurch der Gehäuseinnenraum des Transportbehälters 2 zugänglich wird.

Zur wasserdichten oder spritzwassergeschützten Anordnung des Deckels 2.7 auf dem Grundelement des Transportbehälters 2 weist der Deckel 2.7 und/oder das Grundelement eine Dichtung, insbesondere eine montierte Formdichtung auf, die beim Befestigen des Deckels 2.7 auf dem Grundelement derart angedrückt wird, dass die durch die freien Enden der Behälterseitenwände 2.3 - 2.6 definierte Gehäuseöffnung des Transportbehälters 2 wasserdicht oder zumindest spritzwassergeschützt verschlossen wird.

Vorzugsweise kann auch am freiendseitigen Randbereich der Behälterseitenwände 2.3 - 2.6 ein umlaufender Falz vorgesehen, der von einer am Deckel 2.7 angeordneten Dichtung außenumfangsseitig umschlossen wird. Durch die durch den Falz gebildete, vom Randbereich der Behälterseitenwände 2.3 - 2.6 abstehende Überhöhung wird das Eindringen von Wasser in den Gehäuseinnenraum des Transportbehälters 2 zusätzlich zur Dichtung wirksam verhindert.

Der Deckel 2.7 kann dabei über zumindest eine Absperreinrichtung 9, vorzugsweise über zwei zueinander beabstandet vorgesehene Absperreinrichtungen 9, mit dem Transportbehälter 2 absperrbar vorgesehen sein. Vorzugsweise können die Absperreinrichtungen 9 als Spannhebelverschlüsse ausgebildet sein.

Der Deckel 2.7 kann weiterhin als Tisch und/oder Sitzfläche für zumindest zwei Personen ausgebildet sein. Hierfür kann beispielsweise auf dem Deckel 2.7 eine gepolsterte Sitzauflage 10 vorgesehen sein. Zudem kann der Deckel 2.7 auf Grund seiner Formstabilität als weitere Ladefläche des Transportbehälters 2 genutzt werden.

Der Transportbehälter 2 kann dabei aus einem korrosionsbeständigen und/oder formstabilen Material, insbesondere Aluminium, verzinktem Blech oder einem Polymer, hergestellt sein. Somit wird einer wetterfester Transportbehälter 2 geschaffen. Zur weiteren Erhöhung der Formstabilität des Transportbehälters 2 kann dieser eine strukturierte Oberfläche zumindest in einem Teilabschnitt einer der Behälterseitenwände 2.3 - 2.6 aufweisen.

Ferner kann an dem Transportbehälter 2 an einer der Behälterseitenwände 2.3 - 2.6 zumindest ein klappbarer Tragegriff 11 vorgesehen, insbesondere angeordnet sein. Bevorzugt sind dabei zumindest zwei klappbare Tragegriffe 11 vorgesehen, wobei der erste Tragegriff 11 an der als Rückwand ausgebildeten Behälterseitenwand 2.5 und der zweite Tragegriff 11 an der als Vorderwand ausgebildeten Behälterseitenwand 2.6 angeordnet sein kann. Die Tragegriffe 11 sind dabei auch zur Anordnung bzw. Aufnahme von Spanngurten zur Befestigung von Gegenstanden G auf dem Deckel 2.7 ausgebildet.

Das Innenvolumen des Transportbehälters 2 kann zwischen 100l und 150l, vorzugsweise näherungsweise 135l bei einer Traglast von in etwa 60kg betragen.

An einer Unterseite US des Behälterbodens 2.2, also auf der Ebene E zugewandten Seite des Behälterbodens 2.2, kann dabei zumindest ein den Transportbehälter 2 abstützender Standfuß 12 vorgesehen sein. Vorzugsweise sind dabei mehrere, vorzugsweise vier Standfüße 12 an der Unterseite US des Behälterbodens 2.2 angeordnet. Besonders vorteilhaft sind die Standfüße 12 jeweils in einem Eckbereich des Behälterbodens 2.2 vorgesehen. Vorzugsweise sind die Standfüße 12 als Gummifüße ausgebildet, mittels denen das Transportgerät 1 in einer Standposition SP auf einer Ebene E zur Auflage gelangt.

Ferner kann an der Unterseite US des Behälterbodens 2.2 zumindest ein weiterer Standfuß 13 vorgesehen, insbesondere angeordnet sein. Dieser weitere Standfuß 13 ist dabei vorteilhaft im Bereich der als Rückwand ausgebildeten Behälterseitenwand 2.5 an der Unterseite US des Behälterbodens 2.2 vorgesehen und dazu ausgebildet, sich in einer Fahrposition FP des Trasportgerätes 1 auf der Ebene E abzustützen. Insbesondere kann der weitere Standfuß 13 klappbar an der Unterseite US des Behälterbodens 2.2 des Transportbehälters 2 angeordnet sein. Ferner kann das Transportgerät 1 auch einen Bodenanker aufweisen.

Zudem ist an dem Transportbehälter 2 des Transportgerätes 1 ein zwischen einer Fahrposition FP und einer Standposition SP um eine erste Schwenkachse SA1 verschwenkbar angeordnetes Fahrwerk 3 mit wenigstens zwei Laufrädern 4 vorgesehen. Dabei ist das Transportgerät 1 zumindest in der Fahrposition FP des Fahrwerks 3 auf der Ebene E mittels der Laufräder 4 fahrbar abgestützt, während das Transportgerät 1 in der Standposition SP des Fahrwerks 3 auf der Ebene E zumindest abschnittweise aufliegt.

Mehr im Detail weist das Fahrwerk 3 dabei einen in Fahrrichtung A gesehenen rechten Fahrwerksteil 3.1 und einen linken Fahrwerkteil 3.2 auf. Die Fahrwerksteile 3.1 und 3.2 sind dabei spiegelsymmetrisch, jedoch ansonsten identisch zueinander ausgebildet. Werden in der nachfolgenden Beschreibung Teile mit einem Punkt 1 (".1") abgekürzt, so beziehen sich diese Erläuterungen, Teile, Baugruppen, oder Elemente auf den rechten Fahrwerksteil 3.1, während mit einem Punkt 2 (".2") abgekürzte Erläuterungen, Teile, Baugruppen oder Elemente sich auf den linken Fahrwerkteil 3.2 beziehen. Da jedoch das Fahrwerk 3 insbesondere spiegelsymmetrisch zu einer Mittelebene ME, jedoch ansonsten identisch ausgebildet ist, gelten im Zusammenhang lediglich eines Fahrwerkteils 3.1 oder 3.2 getroffene Ausführungen auch für den jeweils anderen Fahrwerkteil 3.1, 3.2 "Mutatis Mutandis".

Dabei weist das Fahrwerk 3 einen rechten und linken Schwenkhebel 14.1 und 14.2 auf, über den der entsprechende rechte und linke Fahrwerksteil 3.1, 3.2 mit der Unterseite US des Transportbehälters 2 verbunden ist. Mehr im Detail ist an dem jeweiligen Schwenkhebel 14.1 und 14.2 die erste Schwenkachse SA1 ausgebildet, über der der jeweilige Schwenkhebel 14.1 und 14.2 um die erste Schwenkachse SA1 drehbar gelenkig an der Unterseite US des Transportbehälters 2 angelenkt ist.

Der rechte und linke Schwenkhebel 14.1, 14.2 kann dabei im Wesentlichen Y-förmig ausgebildet sein und dabei in seinen jeweiligen freien Randbereichen der entsprechenden Längserstreckung der Y-Form einen Anlenkungsabschnitt A1.1, A2.1, A3.1 bzw. A1.2, A2.2, A3.2 aufweisen.

Mehr im Detail weist der linke Schwenkhebel 14.1 dabei einen ersten Anlenkungsabschnitt A1.1, einen zweiten Anlenkungsabschnitt A2.1 und einen dritten Anlenkungsabschnitt A3.1 auf, während der rechte Schwenkhebel 14.2 einen ersten Anlenkungsabschnitt A1.2, einen zweiten Anlenkungsabschnitt A2.2 sowie einen dritten Anlenkungsabschnitt A3.2 aufweist.

Die erste Schwenkachse SA1 ist dabei drehbar an dem jeweiligen ersten Anlenkungsabschnitt A1.1 und A1.2 des entsprechenden Schwenkhebels 14.1 und 14.2 aufgenommen, während an dem jeweiligen zweiten Anlenkungsabschnitt A2.1, A2.2 jeweils ein Stellhebel 5 drehbar angebunden ist. Über den jeweiligen Stellhebel 5 ist dabei das Fahrwerk 3 mit einer um zumindest ein zweite Schwenkachse SA2 schenkbaren Hebelmechanik 6 zwangskoppelt.

Ferner sind an dem jeweiligen dritten Anlenkungsabschnitt A3.1, A3.2 des entsprechenden Schwenkhebels 14.1, 14.2 die wenigstens zwei Laufräder 4 des Fahrwerks 3 um eine jeweilige Drehachse DA drehbar gelagert aufgenommen. Insbesondere können die Laufräder 4 hierbei mittels eines Lagers, vorzugsweise eines Kugellagers bzw. eines Radlagers, an dem jeweiligen dritten Anlenkungsabschnitt A3.1, A3.2 drehbar angeordnet sein. Dabei kann es sich bei dem Kugellagern für die Laufräder 4 vorzugsweise auch um Edelstahradlager handeln.

Vorzugsweise sind die Laufräder 4 an dem jeweiligen dritten Anlenkungsabschnitt A3.1, A3.2 zu dem ersten Anlenkungsabschnitt A1.1, A1.2 in Fahrrichtung A beabstandet vorgesehen, und zwar derart, dass die Drehachsen DA der Laufräder 4 in der Fahrposition FP des Fahrwerks 3 mittig oder näherungsweise mittig zwischen der als Rückwand ausgebildeten Behälterseitenwand 2.5 und der als Vorderwand ausgebildeten Seitenwand 2.6 vorgesehen sind.

Insbesondere ist über den jeweiligen Schwenkhebel 14.1, 14.2 eine Einzelradaufhängung für die Laufräder 4 des Fahrwerks 3 ausgebildet.

Die Laufräder 4 können dabei eine Luftbereifung oder pannensichere PU-Reifen aufweisen. Insbesondere können die Laufräder 4 damit spurfrei ausgebildet sein.

Ferner kann das Fahrwerk 3 mittels des zumindest einen Stellhebels 5 eine Federung F für die Laufräder 4 ausbilden. Mehr im Detail kann die Federung F als Einzelradfederung ausgebildet sein. Hierfür ist der jeweilige Stellhebel 5 der rechten und/oder linken Fahrwerksseite 3.1, 3.2 insbesondere zweiteilig ausgebildet und weist jeweils ein erstes mit der Hebelmechanik 6 zwangsgekoppeltes Stellhebelelement 5.1 sowie ein zu dem ersten Stellhebelelement 5.1 entlang der Längsstreckung des Stellhebels 5 verschiebbar ausgebildetes zweiten Stellhebelelement 5.2 auf, das unter einer Federspannung verschiebbar an dem ersten Stellhebelelement 5.1 angebunden ist. Die Verschiebbarkeit des zweiten Stellhebelelementes 5.2 ist mittels eine Doppelpfeils kenntlich gemacht.

Zur Einleitung der Schwenkbewegung ist dabei das zwischen der Fahrposition FP und der Standposition SP verschwenkbare Fahrwerk 3 über den zumindest einen Stellhebel 5 mit der um die zumindest eine zweite Schwenkachse SA2 schwenkbaren Hebelmechanik 6 zwangsgekoppelt, die ihrerseits wiederum zwischen einer ersten Position P1 und einer zweiten Position P2 um die zumindest eine zweite Schwenkachse SA2 derart schwenkbar ausgebildet ist, dass die Hebelmechanik 6 in der ersten Position P1 das Fahrwerk 3 in die Standposition SP und in der zweiten Position P2 in die Fahrposition FP jeweils lagefixiert verschwenkt.

Die Hebelmechanik 6 kann dabei eine Deichsel 16 für das Transportgerät 1 ausbilden. Hierfür kann die Deichsel 16 ein Griffelement 22 aufweisen, an dem das Transportgerät 1 bewegt, insbesondere geschoben und/oder gezogen, werden kann. Das Griffelement 22 kann dabei einen rechten Hebelmechanikteil 6.1 mit einem linken Hebelmechanikteil 6.2 verbinden. Auch kann an der Deichsel 16 eine nicht nähergehend dargestellte Anhängevorrichtung zum lösbaren Anhängen der Transportvorrichtung 1 an einem Zweirad, insbesondere einem Fahrrad, vorgesehen sein.

Analog dem Fahrwerk 3 weist auch die Hebelmechanik 6 einen in Fahrrichtung A gesehenen rechten Hebelmechanikteil 6.1 und einen linken Hebelmechanikteil 6.2 auf. Die Hebelmechanikteile 6.1, 6.2 sind dabei spiegelsymmetrisch, jedoch ansonsten identisch zueinander ausgebildet. Werden in der nachfolgenden Beschreibung Teile mit einem Punkt 1 (".1") abgekürzt, so beziehen sich diese Erläuterungen, Teile, Baugruppen, oder Elemente auf den rechten Hebelmechanikteil 6.1, während mit einem Punkt 2 (".2") abgekürzte Erläuterungen, Teile, Baugruppen oder Elemente sich auf den linken Hebelmechanikteil 6.2 beziehen. Da jedoch die Hebelmechanik 6 insbesondere spiegelsymmetrisch zu einer Mittelebene ME, jedoch ansonsten identisch ausgebildet ist, gelten im Zusammenhang lediglich eines Hebelmechanikteils 6.1 oder 6.2 getroffene Ausführungen auch für den jeweils anderen Hebelmechanikteil 6.1, 6.2 "Mutatis Mutandis".

Hierbei kann vorgesehen sein, dass die Hebelmechanik 6 ein an dem Transportbehälter 2 fest angeordnetes Befestigungselement 17 aufweist, das sich im Wesentlichen in seiner Längserstreckung lotrecht zu der Unterseite US des Transportbehälters 2 erstreckt. Insbesondere ist das Befestigungselement 17 an zumindest einer der als Längsseitenwände ausgebildeten Behälterseitenwände 2.3, 2.4 angeordnet.

Mehr im Detail weist der rechte Hebelmechanikteil 6.1 ein rechtes Befestigungselement 17.1 und der linke Hebelmechanikteil 6.2 ein linkes Befestigungselement 17.2 auf. Insbesondere ist das Befestigungselement 17 orstfest an dem Transportbehälter 2 angeordnet, beispielsweise an dem Transportbehälter 2 angenietet.

An dem rechten Befestigungselement 17.1 ist dabei ein erstes Stellelement 18.1 mit einem ersten Endbereich um die zweite Schwenkachse SA2 drehbar angelenkt angeordnet, wobei an dem ersten Stellelement 18.1 zudem der Stellhebel 5 gelenkig vorgesehen ist. Ferner ist an dem ersten Stellelement 18.1 an dem der zweiten Schwenkachse SA2 gegenüberliegenden zweiten Endbereich eine dritte Schwenkachse SA3 ausgebildet, an der ein zweites Stellelement 19.1 um die dritte Schwenkachse SA3 drehbar angeordnet ist.

Überdies ist oberhalb, also in Richtung des Deckels 2.7 versetzt, des ersten Stellelementes 18.1 ein drittes Stellelement 20.1 an dem Befestigungselement 17.1 um eine vierte Schwenkachse SA4 drehbar mit einem ersten Bereich angeordnet, während der dem ersten Endbereich gegenüberliegende zweite Endbereich um eine fünfte Schwenkachse SA5 drehbar an dem zweiten Stellelement 19.1 angeordnet ist. Das erste Stellelement 18.1 und dritte Stellelement 20.1 sind dabei untereinander parallelogrammförmig an dem Befestigungselement 17.1 bzw. dem zweiten Stellelement 19.1 angeordnet.

Damit ist die Hebelmechanik 6 zwischen der ersten Position P1 als eingeklappte Position und der zweiten Position P2 als ausgeklappte Position in sich klappbar bzw. zusammenklappbar ausgebildet.

Mehr im Detail ist die Hebelmechanik 6 um die zweite bis fünfte Schwenkachse SA2...SA5 zwischen einer eingeklappten Position P1 und einer ausgeklappten Position P2 derart verschwenkbar ist, dass die Hebelmechanik 6 in der eingeklappten Position P1 das Fahrwerk 3 in die Standposition SP und in der ausgeklappten Position P2 in der Fahrposition FP hält.

Hierfür kann die Hebelmechanik 6 zumindest eine Sperreinrichtung 15 aufweisen, mittels der die Hebelmechanik 6 in der ersten Position P1 und/oder der zweiten Position P2 sperrbar ist und somit das Fahrwerk 3 in der Standposition SP und der Fahrposition FP lagefixiert gehalten ist. Die Sperreinichtung 15 kann als schwenkbarer Haken ausgebildet sein, der in der erste Position P1 in die dritte Schwenkachse SA3 einhakt und in der zweiten Position P2 in die fünfte Schwenkachse SA5.

Überdies können mehrere Transportgeräte 1 in ihrer jeweiligen Standposition SP übereinander stapelbar ausgebildet sein.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 100: Kupplungsanordnung
- 110: erstes Kupplungsteil
- 111: erstes Kupplungselement
- 112: erstes Befestigungselement
- 113: Trägerblech
- 113.1: Basisschenkel
- 113.2: Seitenschenkel
- 114: Trägerblech
- 114.1: Basisschenkel
- 114.2: Seitenschenkel
- 115: Schraubverbindung
- 116: Befestigungsabschnitt
- 116.1: Basisschenkel
- 116.2: Seitenschenkel
- 117: Kupplungsabschnitt
- 118: Kupplungszapfenabschnitt
- 120: zweites Kupplungsteil
- 121: zweites Kupplungselement
- 122: zweites Befestigungselement
- 123: Steckmuffe
- 126: Kupplungsgestänge
- 127: Klemmvorrichtung
- 128, 129: Klemmschale

- 1: Transportgerät
- 2: Transporteinrichtung
- 2.2: Behälterboden
- 2.3-2.6: Behälterseitenwand
- 2.7: Deckel
- 3: Fahrwerk
- 4: Laufräder
- 5: Stellhebel
- 6: Hebelmechanik
- 9: Absperreinrichtung
- 10: Sitzauflage
- 11: Tragegriff
- 12: Standfuß
- 13: Standfuß

- 9: Absperreinrichtung
- 11: Tragegriff
- 12: Standfuß
- 14: Schwenkhebel
- 16: Deichsel
- 17: Befestigungselement
- 18...20: Stellelement
- 22: Griffelement

- A: Fahrrichtung
- A1...A3: Anlenkungsabschnitt
- E: Ebene
- SA1...SA5: Schwenkachse
- SA2: zweite Schenkachse
- GE: Gelenkeinrichtung
- GE1, GE2: freies Ende
- GA1: erste Gelenkachse
- GA2: zweite Gelenkachse
- KP: Kupplungsposition
- P1: erste Position
- P2: zweite Position
- G: Gegenständen
- LR: Längsrichtung
- QR: Querrichtung
- LA: Längsachse

## Patentansprüche

1. Kupplungsanordnung (100) zum Verbinden und/oder Zusammenhalten eines Transportgeräts (1) zur Beförderung von Gegenständen (G) und/oder Personen mit einem Fahrzeug, insbesondere einem Fahrrad oder E-Bike,
zumindest aufweisend ein erstes Kupplungsteil (110) und ein zweites Kupplungsteil (120), wobei das erste und zweite Kupplungsteil (110, 120) zusammenwirken und miteinander lösbar verbindbar sind,
wobei das erste Kupplungsteil (110) zumindest ein erstes Kupplungselement (111) und ein erstes Befestigungselement (112) und das zweite Kupplungsteil (120) zumindest ein zweites Kupplungselement (121) und ein zweites Befestigungselement (122) aufweisen, wobei das erste Kupplungselement (111) des ersten Kupplungsteils (110) lösbar, jedoch fest, mit dem zweiten Kupplungselement (121) des zweiten Kupplungsteils (120) verbindbar ist,
wobei das erste Befestigungselement (112) des ersten Kupplungsteils (110) direkt oder indirekt mit dem Fahrzeug und das zweite Befestigungselement (122) des zweiten Kupplungsteils (120) direkt oder indirekt mit dem Transportgerät (1) verbindbar ist,
wobei das erste Kupplungsteil (110) eine Gelenkeinrichtung (GE) aufweist, die das erste Kupplungselement (111) kardanisch mit dem ersten Befestigungselement (112) verbindet, wobei die Gelenkeinrichtung (GE) vorzugsweise zwei im Wesentlichen rechtwinklig zueinander verlaufende Gelenkachsen (GA1, GA2) aufweist,
und wobei das erste Kupplungselement (111) des ersten Kupplungsteils (110) und das zweite Kupplungselement (121) des zweiten Kupplungsteils (120) als derartige Steckkupplung ausgebildet sind, bei der das erste oder zweite Kupplungselement (111, 121) ausschließlich durch ein axiales Ineinanderstecken mit dem entsprechend korrespondierenden ersten oder zweiten Kupplungselement (111, 121) in eine Kupplungsposition (KP) kuppelnd einrastet.

2. Kupplungsanordnung nach Anspruch 1, **dadurch gekennzeichnet, dass** die kardanische Verbindung zwischen dem ersten Kupplungsteil (111) und dem ersten Befestigungselement (112) elastomerfrei ausgebildet ist.

3. Kupplungsanordnung nach Anspruch 1 oder 2, **dadurch gekennzeichnet, dass** das erste Befestigungselement (112) des ersten Kupplungsteils (110) als Adapterelement zum festen, jedoch lösbaren, befestigen des ersten Kupplungsteils (110) an dem Fahrzeug (1), insbesondere der Sattelstütze, dem Sitzrohr, zumindest einer Sitzstrebe, der Pletscherplatte, zumindest einer Kettenstrebe, dem Schaltauge, der Laufradachse, dem hinteren Gabelende, oder dem Gepäckträger des Fahrrads, ausgebildet ist.

4. Kupplungsanordnung nach einem der vorangehenden Ansprüche, **dadurch gekennzeichnet, dass** das erste Befestigungselement (112) zwei Trägerbleche (113, 114) aufweist, die über eine Schraubverbindung (115) eine greifende, zueinander verspannbare Verbindungseinrichtung ausbilden, und beispielsweise zum Anordnen des ersten Befestigungselementes (112) an der Pletscherplatte eines Fahrrads vorgesehen bzw. ausgebildet sind.

5. Kupplungsanordnung nach einem der vorangehenden Ansprüche, **dadurch gekennzeichnet, dass** das erste Befestigungselement (112) mittels der zwei Trägerbleche (113 und 114) an dem Gepäckträger oder einem anderen Teil oder Bauteil vorzugsweise des Hinterbaus eines Fahrradrahmens eines Fahrrads angeordnet ist.

6. Kupplungsanordnung nach einem der vorangehenden Ansprüche, **dadurch gekennzeichnet, dass** die beiden Trägerbleche (113, 114) im Querschnitt jeweils als U-Profilelement ausgebildet sind, wobei die Schraubverbindung (115) einen jeweiligen Basisschenkel (113.1, 114.1) der beiden als U-Profilelement ausgebildeten Trägerbleche (113, 114) verbindet.

7. Kupplungsanordnung nach einem der vorangehenden Ansprüche, **dadurch gekennzeichnet, dass** die Gelenkeinrichtung (GE) als die zwei rechtwinklig zueinander verlaufenden Gelenkachsen (GA1 und GA2) aufnehmendes Verbindungstück ausgebildet ist, das mit seinem ersten freien Ende (GE1) zwischen beiden Seitenschenkeln (113.2) des Trägerbleches (113) mittels der ersten Gelenkachse (GA1) drehbar gelagert aufgenommen ist und/oder mit seinem zweiten freien Ende (GE2) um die zweite Gelenkachse (GA2) drehbar gelagert an dem ersten Kupplungselement (111) angeordnet ist.

8. Kupplungsanordnung nach einem der vorangehenden Ansprüche, **dadurch gekennzeichnet, dass** das zweite freie Ende (GE2) der Gelenkeinrichtung (GE) abgerundet ausgebildet ist.

9. Kupplungsanordnung nach einem der vorangehenden Ansprüche, **dadurch gekennzeichnet, dass** zur um die zweite Gelenkachse (GA2) drehbar gelagerten Anordnung des zweiten freien Endes (GE2) der Gelenkeinrichtung (GE) an dem ersten Kupplungselement (111) das erste Kupplungselement (111) einen U-profilförmigen Befestigungsabschnitt (116) mit einem Basisschenkel (116.1) und sich jeweils seitlich sowie rechtwinklig von dem Basisschenkel (116.1) erstreckende Seitenschenkel (116.2) aufweist, zwischen denen die zweite Gelenkachse (GA2) der Gelenkeinrichtung (GA) gelenkig aufgenommen ist.

10. Kupplungsanordnung nach einem der vorangehenden Ansprüche, **dadurch gekennzeichnet, dass** die erste und/oder zweite Gelenkachse (GA1, GA2) der Gelenkeinrichtung (GE) unter Zwischenschaltung eines Lagers, beispielsweise einer Lagerhülse, an dem entsprechenden Befestigungselement (112) und/oder Kupplungselement (111) angeordnet ist.

11. Kupplungsanordnung nach einem der vorangehenden Ansprüche, **dadurch gekennzeichnet, dass** der Befestigungsabschnitt (116) einteilig, insbesondere einstückig, mit dem ersten Kupplungselement (111) ausgebildet ist und/oder das Kupplungselement (111) den Befestigungsabschnitt (116) und einen sich entlang einer Längsachse (LA) erstreckenden Kupplungsabschnitt (117) aufweist, der vorzugsweise ebenfalls einteilig, insbesondere einstückig, mit dem ersten Kupplungselement (111) ausgebildet ist.

12. Kupplungsanordnung nach einem der vorangehenden Ansprüche, **dadurch gekennzeichnet, dass** der Kupplungsabschnitt (117) als sich entlang der Längsachse (LA) erstreckender Kupplungszapfen ausgebildet ist, der insbesondere einen sich vollumfänglich radial an der Außenmantelfläche umlaufenden Kupplungszapfenabschnitt (118) aufweist.

13. Kupplungsanordnung nach einem der vorangehenden Ansprüche, **dadurch gekennzeichnet, dass** das erste Kupplungselement (111) des ersten Kupplungsteils (110) den als Kupplungszapfen (118) ausgebildeten Kupplungsabschnitt (117) aufweist, der durch ausschließlich axiales Ineinanderstecken mit einer als Steckmuffe (123) ausgebildeten zweiten Kupplungselements (121) des zweiten Kupplungsteils (120) in der Kupplungsposition (KP) einrastet.

14. Kupplungsanordnung nach einem der vorangehenden Ansprüche, **dadurch gekennzeichnet, dass** das zweite Kupplungselement (121) des zweiten Kupplungsteils (120) die Steckmuffe (123) aufweist, in die der als Kupplungszapfen ausgebildete Kupplungsabschnitt (117) des ersten Kupplungselementes (111) durch ausschließlich axiales Verschieben in der Kupplungsposition (KP) verrastend einschiebbar ist und/oder dass die Steckmuffe (123) als Schiebemuffe mit einer entgegen einer Federbelastung in axialer Richtung, also entlang der Längsachse (LA), verschiebbaren Schiebhülse ausgebildet ist, durch die zumindest eine in der Steckmuffe (123) vorgesehene Sperrkugel entriegelt und in der Kupplungsposition (KP) durch wiederum axiales Verschieben der Schiebhülse mit dem als Kupplungszapfen ausgebildeten Kupplungsabschnitt (117) verrastend verriegelt.

15. Kupplungsanordnung nach einem der vorangehenden Ansprüche, **dadurch gekennzeichnet, dass** in der Kupplungsposition (KP) das erste Kupplungselement (111) des ersten Kupplungsteils (110) relativ zu dem zweiten Kupplungselement (121) des zweiten Kupplungsteils (120) um die Längsachse (LA) drehbar ausgebildet ist.

16. Kupplungsanordnung nach einem der vorangehenden Ansprüche, **dadurch gekennzeichnet, dass** das zweite Befestigungselement (122) ein Kupplungsgestänge (126) sowie eine Klemmvorrichtung (127) aufweist, die das zweite Kupplungselement (121) mit dem Transportgerät (1) verbindet.

17. Kupplungsanordnung nach einem der vorangehenden Ansprüche, **dadurch gekennzeichnet, dass** mittels der Klemmvorrichtung (127) die Kupplungsanordnung (100) an beispielsweise der Deichsel (16) oder einem Griffelement (22) des Transportgerätes (1) fest, jedoch lösbar, angeordnet ist und/oder die Klemmvorrichtung (127) zwei Klemmschalen (128, 129) aufweist, die gegenseitig mittel Schraubverbindungen klemmbar ausgebildet sind und/oder die Klemmvorrichtung (127) über eine Schraubverbindung (130) lösbar an dem Kupplungsgestänge (127) vorgesehen ist.

18. Transportgerät (1), insbesondere Fahrradanhänger, zur Beförderung von Gegenständen (G) und/oder Personen, umfassend zumindest eine Kupplungsanordnung (100) zum Verbinden und/oder Zusammenhalten des Transportgeräts (1) mit einem Fahrzeug, insbesondere einem Fahrrad oder E-Bike, gemäß einem der vorangehenden Ansprüche 1 bis 17.
